# EUROPEAN PATENT APPLICATION

(11) **EP 4 722 160 A1**
(43) Date of publication of application: **08.04.2026**
(21) Application number: 24815180.5
(22) Date of filing: 13.05.2024
(51) Int. Cl.: C01G 23/00, C09K 3/14, F16D 69/02

(54) **MAGNESIUM POTASSIUM TITANATE, FRICTION ADJUSTING MATERIAL, FRICTION MATERIAL COMPOSITION, FRICTION MATERIAL, AND FRICTION MEMBER**

(30) Priority: 26.05.2023 JP 2023087120
(71) Applicant: Otsuka Chemical Co., Ltd., Osaka-shi, Osaka 540-0021 (JP)
(72) Inventor: ITO, Yasuhito, Tokushima-shi, Tokushima 771-0193 (JP)
(74) Representative: Ter Meer Steinmeister & Partner
(86) International application number: PCT/JP2024/017660
(87) International publication number: WO 2024/247696

(57) **Abstract**

Provided is a magnesium potassium titanate capable of increasing, when used in a friction material, the coefficient of friction of the friction material in a high-load region. A magnesium potassium titanate is represented by a composition formula KₓMg_{0.4}Ti_{1.6}O_{4-y} [where 0.1 ≤ x ≤ 0.6 and y = (0.8-x)/2], wherein, in terms of Raman spectrum, a ratio (Ia/Ib) of a peak area (Ia) in a range of 100 cm⁻¹ to 165 cm⁻¹ to a peak area (Ib) in a range of 215 cm⁻¹ to 325 cm⁻¹ is not less than 0.03 and a ratio (Ic/Ib) of a peak area (Ic) in a range of 785 cm⁻¹ to 900 cm⁻¹ to the peak area (Ib) in the range of 215 cm⁻¹ to 325 cm⁻¹ is not more than 0.40.

## Description

### [Technical Field]

The present invention relates to magnesium potassium titanates, friction modifiers using the magnesium potassium titanates, friction material compositions using the magnesium potassium titanates, friction materials using the magnesium potassium titanates, and friction members using the magnesium potassium titanates.

### [Background Art]

Friction materials for use in brakes, such as disc brakes or drum brakes, constituting parts of braking devices for various types of vehicles, industrial machines, and so on are required to have a high and stable coefficient of friction, excellent wear resistance, and low aggressiveness toward counter-members. These friction materials are classified into three types: a semimetallic material containing steel-based fibers, such as steel fibers or stainless steel fibers, serving as a fibrous base material in an amount of not less than 30% by mass and less than 60% by mass; a low-steel material containing steel-based fibers in an amount of not less than 10% by mass and less than 30% by mass; and a NAO (non-asbestos-organic) material free of steel-based fibers. A friction material containing steel-based fibers in minute amounts is also classified as a NAO material.

In Japan and the U.S.A, because priority is given to the comfortableness, NAO materials, which have low aggressiveness toward counter-members and good balance between squealing and wear resistance, are predominantly used as friction materials. In Europe, low-steel materials are predominantly used from the viewpoint of holding the coefficient of friction during braking from high speed.

Compositions used in friction materials (hereinafter, referred to as "friction material compositions") generally contain copper fibers or copper powder. A first role of copper is to give a thermal conductivity. Since copper has a high thermal conductivity, it diffuses heat produced during braking from the frictional interface, which makes it possible to reduce wearing out of the friction material derived from an excessive temperature increase and suppress vibrations during braking. A second role of copper is to protect the frictional interface during high-temperature braking. Because of the spreadability of copper, it spreads across the surface of the friction material during braking to form a coating on the surface. In addition, copper transfers to the surface of a counter-member to form an adherent coating (hereinafter, referred to as a "transfer film") thereon. These coatings act as protective films, which enables reduction in wearing out of the friction material during high-temperature braking and development of a stable coefficient of friction. However, in relation to copper-containing friction materials, abrasion powder produced from the friction materials during braking contains copper and is suggested to be likely to become a source of river, lake, and ocean pollutions. For this reason, in California and Washington, U.S.A., state laws prohibiting the sale and assembly into new cars of friction materials containing 0.5% by mass or more copper in 2025 and beyond have come into effect.

For the above reason, regarding NAO materials, attention is currently focused on titanates as components taking the role of a transfer film except for copper. Titanates include titanates having a tunnel crystal structure (for example, potassium hexatitanate) and titanates having a layered crystal structure (for example, magnesium potassium titanate) and these types of titanates are used singly or in combination according to the intended use of the friction material. For example, there is proposed a friction material composition containing a titanate and barium sulfate particles having an average particle diameter of 0.1 µm to 20 µm (see Patent Literature 1).

### [Citation List]

### [Patent Literature]

[PTL 1]
WO 2018/164028

### [Summary of Invention]

### [Technical Problem]

Recently, for braking of hybrid vehicles and electric vehicles coming into significantly widespread use, a regenerative braking system has been mounted on such a vehicle to recover frictional energy during braking. However, when the vehicle batteries are fully charged, the above mechanism does not act. In addition, the vehicle weight increases by the number of batteries mounted on the vehicle and, therefore, it is assumed that the load on the braking system increases by the weight increase. Furthermore, with widespread use of heavy and large vehicles as typified by SUV, it is becoming important for friction materials to have a higher coefficient of friction in a high-load region than ever. Moreover, the friction materials have a problem in that their braking force on overloaded vehicles going down steep roads in some mountainous areas is not sufficient.

A potential candidate for a titanate giving a coefficient of friction in a high-load region is potassium hexatitanate having a thermally stable crystal structure. However, this material is refrained from being used, primarily in Europe, over concerns about containing WHO fibers (fibrous particles having a length of 5 µm or more, a breadth of 3 µm or less, and an aspect ratio of 3 or more) exceeding the environmental standard. Alternatively, magnesium potassium titanate is known as a titanate free from concerns about containing WHO fibers and has excellent wear resistance, but has a problem with its coefficient of friction in a high-load region.

An object of the present invention is to provide a magnesium potassium titanate capable of increasing, when used in a friction material, the coefficient of friction of the friction material in a high-load region, a friction modifier using the magnesium potassium titanate, a friction material composition using the magnesium potassium titanate, a friction material using the magnesium potassium titanate, and a friction member using the magnesium potassium titanate.

### [Solution to Problem]

The present invention provides a magnesium potassium titanate set forth below and a friction modifier, a friction material composition, a friction material, and a friction member each using the magnesium potassium titanate.

Aspect 1: A magnesium potassium titanate represented by a composition formula KₓMg_{0.4}Ti_{1.6}O_{4-y} [where 0.1 ≤ x ≤ 0.6 and y = (0.8-x)/2], wherein, in terms of Raman spectrum of the magnesium potassium titanate, a ratio (Ia/Ib) of a peak area (Ia) in a range of 100 cm⁻¹ to 165 cm⁻¹ to a peak area (Ib) in a range of 215 cm⁻¹ to 325 cm⁻¹ is not less than 0.03 and a ratio (Ic/Ib) of a peak area (Ic) in a range of 785 cm⁻¹ to 900 cm⁻¹ to the peak area (Ib) in the range of 215 cm⁻¹ to 325 cm⁻¹ is not more than 0.40.

Aspect 2: The magnesium potassium titanate according to aspect 1, being substantially free of anatase titanium dioxide.

Aspect 3: The magnesium potassium titanate according to aspect 1 or 2, being in form of platy particles.

Aspect 4: The magnesium potassium titanate according to any one of aspects 1 to 3, having an average particle diameter of 0.1 µm to 100 µm.

Aspect 5: The magnesium potassium titanate according to any one of aspects 1 to 4, having a specific surface area of 0.1 m²/g to 10 m²/g.

Aspect 6: The magnesium potassium titanate according to any one of aspects 1 to 5, having a rate of alkali metal ion dissolution of 0.01% by mass to 15% by mass.

Aspect 7: A friction modifier made of the magnesium potassium titanate according to any one of aspects 1 to 6.

Aspect 8: A friction material composition containing the magnesium potassium titanate according to any one of aspects 1 to 6 and a binder and having a content of copper component of less than 0.5% by mass in terms of copper element relative to a total amount of 100% by mass of the friction material composition.

Aspect 9: The friction material composition according to aspect 8, wherein a content of the magnesium potassium titanate is 1% by mass to 40% by mass relative to a total amount of 100% by mass of the friction material composition.

Aspect 10: The friction material composition according to aspect 8 or 9, further containing at least one of a titanate having a layered crystal structure and a titanate having a tunnel crystal structure.

Aspect 11: The friction material composition according to any one of aspects 8 to 10, being substantially free of sulfide-based solid lubricant.

Aspect 12: The friction material composition according to any one of aspects 8 to 11, wherein a content of steel-based fibers is less than 10% by mass relative to a total amount of 100% by mass of the friction material composition.

Aspect 13: The friction material composition according to any one of aspects 8 to 11, wherein a content of steel-based fibers is not less than 10% by mass relative to a total amount of 100% by mass of the friction material composition.

Aspect 14: A friction material being a formed body of the friction material composition according to any one of aspects 8 to 13.

Aspect 15: A friction member including the friction material according to aspect 14.

### [Advantageous Effects of Invention]

The present invention enables provision of a magnesium potassium titanate capable of increasing, when used in a friction material, the coefficient of friction of the friction material in a high-load region, a friction modifier using the magnesium potassium titanate, a friction material composition using the magnesium potassium titanate, a friction material using the magnesium potassium titanate, and a friction member using the magnesium potassium titanate.

### [Brief Description of Drawings]

[Fig. 1]

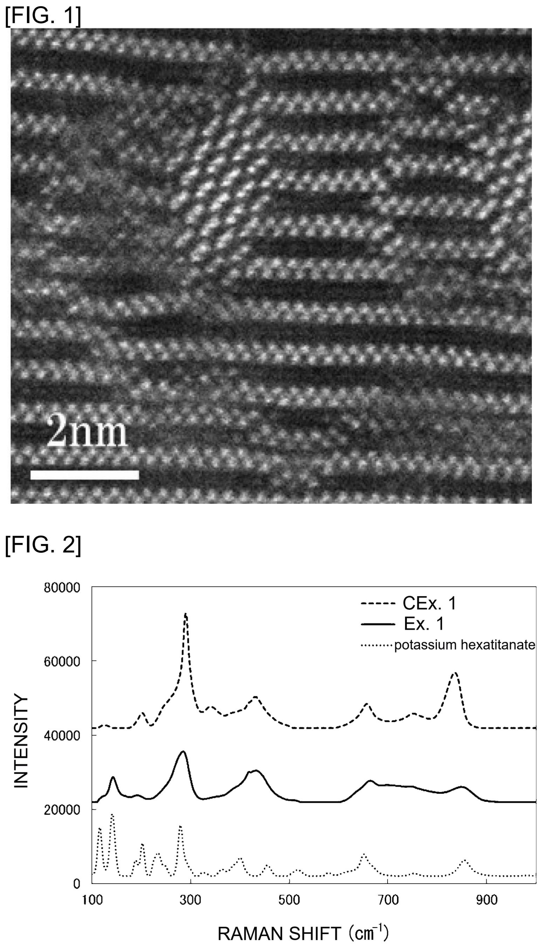

   Fig. 1 is a view showing a scanning transmission electron microscopic (STEM) image of a titanate obtained in Example 1 (Ex. 1).
[Fig. 2]
   Fig. 2 is a graph showing respective Raman spectra of titanates obtained in Example 1 (Ex. 1) and Comparative Example 1 (CEx. 1) and potassium hexatitanate.
[Fig. 3]

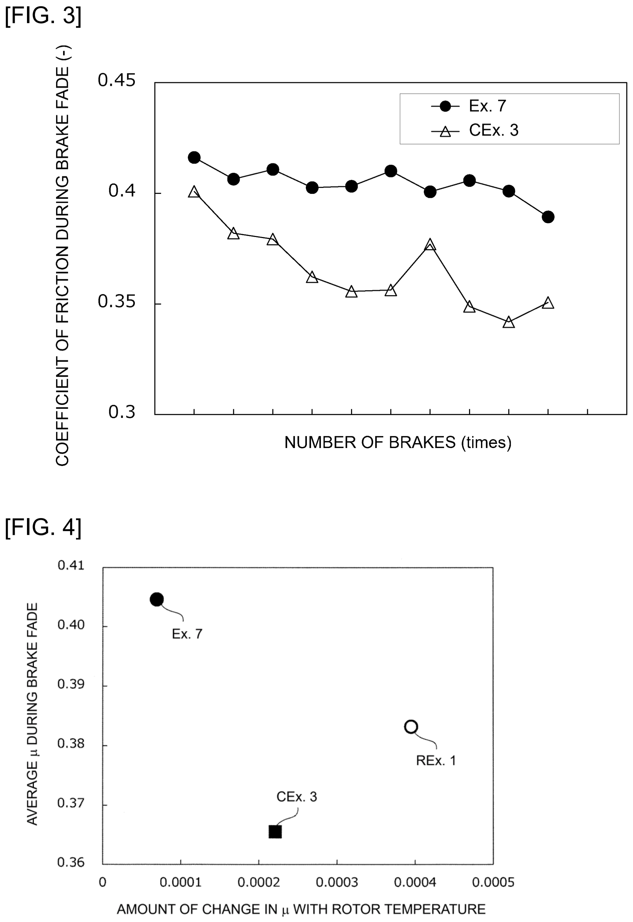

   Fig. 3 is a graph showing the relationship between the number of brakes and the coefficient of friction during brake fade in Friction test 1 for friction members obtained in Example 7 (Ex. 7) and Comparative Example 3 (CEx. 3).
[Fig. 4]
   Fig. 4 is a graph showing the relationship between the amount of change in coefficient of friction (µ) with the rotor temperature and the average coefficient of friction (µ) during brake fade in Friction test 1 for friction members obtained in Example 7 (Ex. 7), Comparative Example 3 (CEx. 3), and Reference Example 1 (REx. 1).
[Fig. 5]

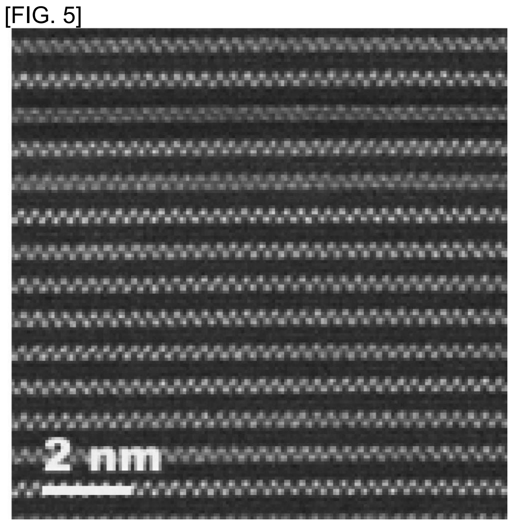

   Fig. 5 is a view showing a scanning transmission electron microscopic (STEM) image of a titanate obtained in Comparative Example 1 (CEx. 1).

### [Description of Embodiments]

Hereinafter, a description will be given of an example of a preferred embodiment for working of the present invention. However, the following embodiment is simply illustrative. The present invention is not at all limited by the following embodiment. Herein, when numerical values are used with "to" in between, this means a range of values including the numerical values put before and after the word as a lower limit and an upper limit of the range.

### <1. Magnesium Potassium Titanate>

A magnesium potassium titanate according to the present invention is represented by a composition formula KₓMg_{0.4}Ti_{1.6}O_{4-y} [where 0.1 ≤ x ≤ 0.6 and y = (0.8-x)/2]. Furthermore, in terms of Raman spectrum of the magnesium potassium titanate, the ratio (Ia/Ib) of the peak area (Ia) in a range of 100 cm⁻¹ to 165 cm⁻¹ to the peak area (Ib) in a range of 215 cm⁻¹ to 325 cm⁻¹ is not less than 0.03 and the ratio (Ic/Ib) of the peak area (Ic) in a range of 785 cm⁻¹ to 900 cm⁻¹ to the peak area (Ib) in the range of 215 cm⁻¹ to 325 cm⁻¹ is not more than 0.40.

The inventor found that with the use, in a friction material, of a magnesium potassium titanate which is represented by a composition formula KₓMg_{0.4}Ti_{1.6}O_{4-y} [where 0.1 ≤ x ≤ 0.6 and y = (0.8-x)/2] and in which, in terms of Raman spectrum of the magnesium potassium titanate, the ratio (Ia/Ib) of the peak area (Ia) in a range of 100 cm⁻¹ to 165 cm⁻¹ to the peak area (Ib) in a range of 215 cm⁻¹ to 325 cm⁻¹ is not less than 0.03 and the ratio (Ic/Ib) of the peak area (Ic) in a range of 785 cm⁻¹ to 900 cm⁻¹ to the peak area (Ib) in the range of 215 cm⁻¹ to 325 cm⁻¹ is not more than 0.40, the coefficient of friction of the friction material in a high-load region can be increased.

Raman spectroscopy is a technique that, because different types of crystal lattices have their respective specific lattice vibrations and, therefore, a crystal irradiated with laser light of a certain specific wavelength scatters light from which energy equal to the phonon energy of the crystal has been lost (called Raman scattering), knowledge about the phonon energy can be acquired by detecting the light with a spectroscope.

In a Raman spectrum of a conventional lepidocrocite magnesium potassium titanate represented by a composition formula K_{0.8}Mg_{0.4}Ti_{1.6}O₄ and known to have a layered crystal structure, a peak is observed near 835 cm⁻¹ and, therefore, this peak can be considered to be a peak derived from the layered crystal structure.

In a Raman spectrum of potassium hexatitanate represented by a composition formula K₂Ti₆O₁₃ and known to have a tunnel crystal structure, peaks are observed near 110 cm⁻¹, near 140 cm⁻¹, and near 860 cm⁻¹ and, therefore, these peaks can be considered to be peaks derived from the tunnel crystal structure of potassium hexatitanate.

Regarding the magnesium potassium titanate according to the present invention, its scanning transmission electron microscopic (STEM) image suggests that it has a tunnel crystal structure. Furthermore, in the Raman spectrum of the magnesium potassium titanate according to the present invention, no peak is observed near 835 cm⁻¹ which can be considered to exhibit a peak derived from a layered crystal structure, but peaks are observed near 140 cm⁻¹ and near 860 cm⁻¹ which can be considered to exhibit peaks derived from a tunnel crystal structure, and, therefore, this Raman spectrum can be said to be nearly a spectrum of a tunnel crystal structure.

Hence, the magnesium potassium titanate according to the present invention can be seen to have no layered crystal structure although it is a magnesium potassium titanate, but have a crystal structure (hereinafter, referred to as a pseud-tunnel crystal structure) near a tunnel crystal structure. From the points described so far, it is obvious that the magnesium potassium titanate according to the present invention and the conventional magnesium potassium titanate are different inorganic materials.

Since the magnesium potassium titanate according to the present invention has a pseud-tunnel crystal structure, it can be considered that when used as a friction modifier for a friction material, it can increase the coefficient of friction. Furthermore, the magnesium potassium titanate according to the present invention can be assumed to be distorted as compared to the tunnel structure of potassium hexatitanate. Therefore, when the magnesium potassium titanate according to the present invention is used as a friction modifier for a friction material containing less steel-based fibers, it can be considered that its crystals collapse under high load, which can effect chemically on metal in a counter-member to increase the stability of the coefficient of friction.

In the present invention, the Ramam spectrum of magnesium potassium titanate can be measured, for example, using a Raman spectrometer under conditions of an excitation wavelength of 785 nm, a wavenumber of 100 cm⁻¹ to 3200 cm⁻¹, an exposure time of one second, and a number of scans of ten. The calculation of the peak area in each of the wavelength ranges can be done, for example, by eliminating the background of the Raman spectrum in the range using the asymmetric least squares method (ASLS method) and then integrating the obtained result numerically with Simpson's rule.

In the present invention, in terms of Raman spectrum of the magnesium potassium titanate, the ratio (Ia/Ib) is not less than 0.03, preferably not less than 0.10, more preferably not less than 0.15, preferably not more than 2.00, more preferably not more than 1.00, and even more preferably not more than 0.40. By defining the ratio (Ia/Ib) within the above range, the coefficient of friction can be further increased.

In the present invention, in terms of Raman spectrum of the magnesium potassium titanate, the ratio (Ic/Ib) is not more than 0.40, preferably not more than 0.35, more preferably not more than 0.26, preferably not less than 0.20, and more preferably not less than 0.22. By defining the ratio (Ic/Ib) within the above range, the coefficient of friction can be further stabilized.

The composition formula of the magnesium potassium titanate according to the present invention is represented by KₓMg_{0.4}Ti_{l.e}O₄-_{y} [where 0.1 ≤ x ≤ 0.6 and y = (0.8-x)/2]. However, from the viewpoint of further facilitating the formation of a pseud-tunnel crystal structure, x is preferably not less than 0.2, more preferably not less than 0.25, preferably not more than 0.5, and more preferably not more than 0.35.

From the viewpoint of further increasing the stability of the coefficient of friction of the magnesium potassium titanate according to the present invention, the content of anatase titanium dioxide therein is preferably not more than 5.0% by mass and more preferably not more than 3.0% by mass, and the magnesium potassium titanate is even more preferably substantially free of anatase titanium dioxide. Herein, the term "substantially free of anatase titanium dioxide" means that the content is less than 1.0% by mass which is a detection limit of the XRD method to be described hereinafter. Needless to say, the content of anatase titanium dioxide may be 0% by mass.

The crystallite size of the magnesium potassium titanate according to the present invention is preferably 20 angstroms to 200 angstroms, more preferably 30 angstroms to 150 angstroms, and even more preferably 35 angstroms to 100 angstroms. When the crystallite size of the magnesium potassium titanate is within the above range, the coefficient of friction can be more efficiently stabilized at a high value. The crystallite size can be determined by the Halder-Wagner method using an X-ray diffractometer.

The magnesium potassium titanate according to the present invention is preferably in the form of non-fibrous particles from the viewpoint of working environment. Examples of the non-fibrous particles include spherical particles (inclusive of particles of a spherical shape with some asperities on its surface and particles of an approximately spherical shape, such as those having an elliptic cross-section), bar-like particles (inclusive of particles of an approximately bar-like shape as a whole, such as rodlike, columnar, prismoidal, reed-shaped, approximately columnar, and approximately reed-shaped particles), platy particles, blocky particles, particles of a shape with multiple projections (such as amoeboid, boomerang-like, cross, and kompeito-like), and particles of an irregular shape. Among them, the above magnesium potassium titanate is preferably in the form of platy particles. Alternatively, the above magnesium potassium titanate may be in the form of porous particles. These various types of particle shapes can be arbitrarily controlled depending on production conditions, particularly, the composition of raw materials, firing conditions, and so on. The above various types of particle shapes can be analyzed, for example, by observation with a scanning electron microscope (SEM).

The term "non-fibrous particles" herein refers to particles in which L/B is 5 or less where L represents a length which is the longest side of, among cuboids (circumscribing cuboids) circumscribing the particle, a cuboid having the minimum volume, B represents a breadth which is the second longest side of the cuboid, and T represents a thickness which is the shortest side of the cuboid (provided, however, that B > T). The phrase "with multiple projections" herein means that the shape of particles projected onto a plane is different at least from a normal polygon, circle, ellipse, and so on, and the particles can take on a shape having projections in two or more directions. More specifically, the projections correspond to portions projecting from a polygon, circle, ellipse or the like (i.e., a basic shape) applied to a photograph (projected figure) captured by a scanning electron microscope (SEM).

The average particle diameter of the magnesium potassium titanate according to the present invention is preferably 0.1 µm to 100 µm, more preferably 1 µm to 50 µm, and even more preferably 3 µm to 30 µm. When the average particle diameter of the magnesium potassium titanate is within the above range, the frictional properties when a friction material is fabricated using the magnesium potassium titanate can be further increased. The term "average particle diameter" herein refers to a particle diameter at a volume-based cumulative value of 50% in a particle size distribution measured by the laser diffraction method. This particle diameter D₅₀ at a volume-based cumulative value of 50% is a particle diameter at a cumulative value of 50% in a cumulative curve of a particle size distribution determined on a volume basis, the cumulative curve assuming the total volume of particles to be 100%, where during accumulation the number of particles is counted from a smaller size side.

The specific surface area of the magnesium potassium titanate according to the present invention is preferably 0.1 m²/g to 10 m²/g, more preferably 0.3 m²/g to 6 m²/g, and even more preferably 0.4 m²/g to 5 m²/g. When the specific surface area is within the above range, the frictional properties when a friction material is fabricated using the magnesium potassium titanate can be further increased. The specific surface area can be measured in conformity with JIS Z 8 8 3 0 .

The rate of alkali metal ion dissolution of the magnesium potassium titanate according to the present invention is preferably 0.01% by mass to 15% by mass, more preferably 0.05% by mass to 6% by mass, and even more preferably 0.1% by mass to 3% by mass.

In a curing reaction of a novolac phenolic resin as an example of a thermosetting resin for use in the friction material composition, a curing agent (or a curing accelerator), for example, hexamethylenetetramine, opens its ring and binds to a hydroxyl group in the novolac phenolic resin, thus initiating the curing reaction. However, if in doing so alkali metal ions exist, it can be assumed that the alkali metal ions undergo an ion-exchange reaction with hydrogen ions in hydroxyl groups of the novolac phenolic resin to inhibit the binding of hexamethylenetetramine (a curing agent (or a curing accelerator) to the novolac phenolic resin (a thermosetting resin) (cause curing inhibition). On the other hand, it can be assumed that abrasion failure of the friction material due to braking causes an alkaline component derived from the magnesium potassium titanate to be dissolved out on the friction surface.

Therefore, by defining the rate of alkali metal ion dissolution to the above upper limit or less, inhibition of curing of the thermosetting resin during shape forming by the application of heat and pressure can be prevented and, as a result, the crack resistance at high temperature and high load can be further increased. Furthermore, by defining the rate of alkali metal ion dissolution to the above lower limit or more, rust formation on a rotor can be suppressed even when a friction material using the magnesium potassium titanate according to the present invention as a friction modifier is allowed to stand without the use thereof for a long time after braking. In short, by defining the rate of alkali metal ion dissolution of the magnesium potassium titanate within the above range, both the crack resistance of the friction material and the suppression of rust formation on a rotor can be satisfied at a higher level.

The term "rate of alkali metal ion dissolution" herein refers to the percentage by mass of alkali metal ions dissolved out of a measurement sample of a magnesium potassium titanate or others placed in water at 80°C into the water.

In the present invention, treated layers made of a surface treatment agent may be formed on the surfaces of particles of the magnesium potassium titanate from the viewpoint of further increasing the adhesion to a binder for use in the friction material composition. Examples of the surface treatment agent include silane coupling agents and titanium coupling agents. Among them, silane coupling agents are preferably used and aminosilane coupling agents, epoxysilane coupling agents or alkylsilane coupling agents are more preferably used. These types of surface treatment agents may be used alone or as a mixture of two or more of them.

Examples of the aminosilane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the epoxysilane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, and 2-(3,4-epoxycyclohexyl)ethyltrimethoxysilane.

Examples of the alkylsilane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, and n-decyltrimethoxysilane.

Known surface treatment methods can be used as the method for forming treated layers made of a surface treatment agent on the surfaces of particles of the magnesium potassium titanate and, for example, the treated layers can be formed by a wet method of dissolving the surface treatment agent in a solvent promoting hydrolysis (for example, water, an alcohol or a mixed solvent of them) to prepare a solution and spraying the solution on the magnesium potassium titanate.

The amount of surface treatment agent in treating the surfaces of particles of the magnesium potassium titanate with the surface treatment agent is not particularly limited, but, in the case of the wet method, the solution of the surface treatment agent may be sprayed to give, for example, an amount of surface treatment agent of 0.1 parts by mass to 20 parts by mass relative to 100 parts by mass of magnesium potassium titanate.

The magnesium potassium titanate according to the present invention can be used also in granular form given by treating the above magnesium potassium titanate with the above-described surface treatment agent or a binder to be described hereinafter. The average particle diameter of the granular magnesium potassium titanate is preferably 100 µm to 200 µm.

### (Method for Producing Magnesium Potassium Titanate)

The method for producing the magnesium potassium titanate according to the present invention is not particularly limited, but the magnesium potassium titanate according to the present invention can be produced, for example, by the following method.

First, a source magnesium potassium titanate (hereinafter, referred to also as a "source KTMO") as a source of the magnesium potassium titanate is prepared. Next, the source KTMO is mixed with an acid (subjected to acid treatment) and a compound obtained by the acid treatment is fired. Thus, the magnesium potassium titanate can be produced.

The preferred source KTMO to be used is a magnesium potassium titanate having a layered crystal structure, such as K_{0,8}Mg_{0.4}Ti_{1.6}O₄ or K_{0.7}Mg_{0.4}Ti_{1.6}O_{3.95}. Because a pseud-tunnel crystal structure is formed using a layered crystal structure as a source material, excellent frictional properties can be obtained. Furthermore, thus, the formation of WHO fibers can be suppressed.

The source KTMO can be obtained, for example, by firing a mixture of: titanium dioxide or a compound generating titanium dioxide by the application of heat (these substances are referred to collectively as a "titanium compound"); potassium oxide or a compound generating potassium oxide by the application of heat (these substances are referred to collectively as a "potassium compound"); and magnesium oxide or a compound generating magnesium oxide by the application of heat (these substances are referred to collectively as a "magnesium compound").

In a conventional method for producing magnesium potassium titanate, potassium chloride, potassium fluoride, potassium molybdate, potassium tungstate or the like is used as a flux for the purpose of allowing crystals to be generated at a temperature lower than the melting point and have an idiomorphic shape surrounded by flat crystal planes to reflect the crystal structure while the crystals grow and thus facilitating the specification of crystal orientation.

In producing a source KTMO for use in the present invention, when the crystal growth of the source KTMO is suppressed, a pseud-tunnel crystal structure can be easily formed in a later production step. Therefore, from this viewpoint, the amount of flux used is, relative to a total amount of 100% by mass of the titanium compound, the potassium compound, and the magnesium compound, preferably less than 10 parts by mass and more preferably 0 parts by mass. From the viewpoint of dissolving out potassium from between crystal layers of the source KTMO having a layered crystal structure to facilitate the formation of a desired composition and a desired pseud-tunnel crystal structure, it is preferred to control the amount of chlorine ions in the particle surface of the source KTMO or in the crystals thereof. Specifically, the rate of chlorine ion dissolution of the source KTMO is preferably not more than 400 ppm and more preferably not more than 200 ppm.

The term "rate of chlorine ion dissolution" herein refers to the percentage by mass of chlorine ions dissolved out of a measurement sample of a titanate, a titanium compound or others placed in water at 25°C into the water.

Examples of the titanium compound that can be used include low-valence titanium dioxide, aqueous materials of titanium dioxide, titanium dioxide hydrates, and titanium hydroxide. Among them, titanium dioxide is preferred as the titanium compound. The preferred crystal system of titanium dioxide is rutile or anatase. The titanium compounds may be used singly or in combination of two or more of them. From the viewpoint of further decreasing the rate of chlorine ion dissolution of the source KTMO, the rate of chlorine ion dissolution of the titanium compound is preferably not more than 100 ppm and more preferably not more than 50 ppm.

Examples of the potassium compound that can be used include potassium oxide, potassium carbonate, potassium hydroxide, and potassium nitrate. Among them, potassium carbonate or potassium hydroxide is preferred as the potassium compound. The potassium compounds may be used singly or in combination of two or more of them.

Examples of the magnesium compound that can be used include magnesium oxide, magnesium hydroxide, magnesium carbonate, and magnesium fluoride. Among them, magnesium hydroxide is preferred as the magnesium compound. The magnesium compounds may be used singly or in combination of two or more of them.

The mixing ratio among the titanium compound, the potassium compound, and the magnesium compound can be appropriately adjusted according to the composition formula of a desired source KTMO. For example, in producing K_{0.8}Mg_{0.4}Ti_{1.6}O₄ as a source KTMO, the mixing ratio can be set to Ti:K:Mg = 1.6:0.8:0.4 (molar ratio).

The firing in producing the source KTMO can be done using an electric furnace or the like. Furthermore, in the firing in producing the source KTMO, the firing reaction can be completed by holding the mixture within a temperature range of 800°C to 1100°C for 1 hour to 24 hours. After the firing, the obtained powder may be ground to a desired size or de-agglomerated by passing it through a sieve.

The acid for use in the acid treatment is not particularly limited and known acids can be used. Examples of the acid for use in the acid treatment include inorganic acids, such as sulfuric acid, hydrochloric acid, and nitric acid, and organic acids, such as acetic acid. Any combination of two or more types of acids may be used, if necessary.

The acid treatment can be performed by mixing an acid into an aqueous slurry of a source KTMO. The concentration of the aqueous slurry is not particularly limited and can be appropriately selected from a wide range of concentrations. Considering workability and so on, the concentration of the aqueous slurry is sufficient to be about 1% by mass to about 30% by mass. Furthermore, because a pseud-tunnel crystal structure is formed by firing a compound in a crystalline state in which potassium has been partially lost by the acid treatment, the amount of acid mixed into the aqueous slurry is, relative to interlayer elements of the source KTMO, preferably 0.10 equivalents to 0.40 equivalents and more preferably 0.20 equivalents to 0.30 equivalents. After the acid treatment, a solid content is separated from the aqueous slurry by filtration, centrifugation or other methods. The separated solid content may be, if necessary, washed with water and dried.

The firing can be done using an electric furnace or the like. Furthermore, from the viewpoint of forming a pseud-tunnel crystal structure and concurrently reducing crystal transformation to anatase titanium dioxide or other crystal structures, the firing temperature is preferably within a temperature range of 350°C to 600°C and more preferably within a temperature range of 400°C to 550°C and this temperature range is held preferably for 0.5 hours to 12 hours, more preferably for 0.5 hours to 10 hours, and even more preferably for 0.5 hours to 5 hours. After the firing, the obtained powder may be ground to a desired size or de-agglomerated by passing it through a sieve. In the manner described thus far, the magnesium potassium titanate according to the present invention can be obtained.

In the method for producing a magnesium potassium titanate according to the present invention, by, as described above, reducing the amount of flux used in producing a source KTMO, lowering the rate of chlorine ion dissolution of the source KTMO or firing unstable crystals of the source KTMO with potassium partially lost to give them thermal energy, the above ratio (Ia/Ib) and ratio (Ic/Ib) of the resultant magnesium potassium titanate can be adjusted to their respective desired ranges.

### <2. Friction Material Composition>

A friction material composition according to the present invention contains the magnesium potassium titanate according to the present invention and a binder, wherein the content of copper component is less than 0.5% by mass in terms of copper element relative to a total amount of 100% by mass of the friction material composition. In the above friction material composition, the magnesium potassium titanate according to the present invention can be used as a friction modifier. If necessary, the friction material composition according to the present invention may further contain steel-based fibers and/or other materials. The term "friction material composition" herein refers to a composition for use in a friction material.

Since the friction material composition according to the present invention contains the magnesium potassium titanate according to the present invention as a friction modifier, it can increase the coefficient of friction of a friction material in a high-load region.

Furthermore, when the friction material composition contains less than 0.5% by mass copper component in terms of copper element relative to a total amount of 100% by mass of the friction material composition or is preferably free of copper component, the friction material composition can reduce environmental load compared to conventional friction material compositions. The term "free of copper component" herein means that the friction material composition contains as raw and processed material none of copper fibers, copper powder, a copper-containing alloy (such as brass or bronze), and a copper compound.

Even when being free of copper component or having a small content of copper component, the friction material composition according to the present invention can obtain excellent frictional properties.

### (2-1. Binder)

The binder binds together mixed materials contained in the friction material composition to give the friction material composition strength. The type of the binder for use in the friction material composition according to the present invention is not particularly limited and any thermosetting resin commonly used as a binder for a friction material can be used.

Examples of the thermosetting resin include: phenolic resins; elastomer-dispersed phenolic resins, such as acrylic elastomer-dispersed phenolic resins and silicone elastomer-dispersed phenolic resins; modified phenolic resins, such as acrylic-modified phenolic resins, silicone-modified phenolic resins, cashew-modified phenolic resin, epoxy-modified phenolic resin, and alkyl benzene-modified phenolic resin; formaldehyde resins; melamine resins; epoxy resins; acrylic resins; aromatic polyester resins; and urea resins. These thermosetting resins may be used singly or in combination of two or more of them. Among them, phenolic resin (straight phenolic resin) or modified phenolic resin is preferred as the thermosetting resin from the viewpoint of further increasing the thermal resistance, the formability, and the frictional properties. Either resole phenolic resin or novolac phenolic resin can be used as the phenolic resin, but novolac phenolic resin is preferred from the viewpoint of the production stability and cost. The novolac phenolic resin may contain, if necessary, an additive, such as a curing agent or a curing accelerator (for example, hexamethylenetetramine).

The content of the binder in the friction material composition is, relative to a total amount of 100% by mass of the friction material composition, preferably 5% by mass to 30% by mass and more preferably 8% by mass to 20% by mass. By defining the content of the binder within the above range, spaces between the mixed materials are filled with a suitable amount of binder, which enables the friction material composition to achieve more excellent frictional properties.

### (2-2. Magnesium Potassium Titanate)

The magnesium potassium titanate for use in the friction material composition according to the present invention is the previously described magnesium potassium titanate according to the present invention. Since the friction material composition contains the magnesium potassium titanate according to the present invention, it can increase the coefficient of friction of a resultant friction material in a high-load region. In addition, it can be expected that the amount of fine wear dust, such as PM (particulate matter) 10 and PM 2.5, produced during braking can be reduced.

The content of the above magnesium potassium titanate in the friction material composition is, relative to a total amount of 100% by mass of the friction material composition, preferably 1% by mass to 40% by mass, more preferably 5% by mass to 35% by mass, and even more preferably 10% by mass to 30% by mass. By defining the content of the magnesium potassium titanate within the above range, the friction material composition can achieve more excellent frictional properties. In the case where the above magnesium potassium titanate and another or other titanates to be described hereinafter are used in combination, the content of the magnesium potassium titanate is preferably 5% by mass to 20% by mass relative to a total amount of 100% by mass of the friction material composition.

The mass ratio of the above magnesium potassium titanate to the binder (magnesium potassium titanate/binder) is preferably 0.1 to 8.0, more preferably 0.5 to 6.0, and even more preferably 1.1 to 4.0. By defining the mass ratio of the above magnesium potassium titanate to the binder within the above range, the formability of a friction material can be further increased and a suitable transfer film can be formed.

### (2-3. Steel-Based Fibers)

The friction material composition according to the present invention may contain, if necessary, in addition to the binder and the magnesium potassium titanate according to the present invention, steel-based fibers commonly used in a friction material composition. Examples of the steel-based fibers include steel fibers and stainless steel fibers and the preferred steel-based fibers are steel fibers.

Examples of the type of steel fibers include: straight fibers obtained by chatter vibration cutting or so on; and curled fibers obtained by cutting long fibers or other methods. The straight fibers have a straight fibrous shape. On the other hand, the curled fibers show a shape having a curved portion and the shape includes a simple arclike shape, a wavy shape, and a helically or spirally curved shape.

Among them, curled fibers are preferred as steel fibers from the viewpoint of reducing fallout from the friction surface of the friction material and more certainly ensuring the frictional properties during high-temperature braking. In addition, curled fibers are more preferably those including a portion having a radius of curvature of not more than 100 µm. In this case, anchoring of the fibers into the friction material becomes firmer, which further reduces fiber fallout from the friction surface of the friction material.

The average fiber length of the steel-based fibers is preferably not more than 5 mm and more preferably not more than 2.5 mm from the viewpoint of further increasing the wear resistance at high temperatures. Furthermore, from the viewpoint of further increasing the reinforceability, the average fiber length of the steel-based fibers is preferably not less than 0.1 mm, more preferably not less than 0.5 mm, and even more preferably not less than 1.1 mm.

The average fiber diameter of the steel-based fibers is preferably not more than 300 µm and more preferably not more than 100 µm from the viewpoint of further reducing vibrations during braking at high temperatures. Furthermore, from the viewpoint of further preventing the fallout of the steel-based fibers, the average fiber diameter of the steel-based fibers is preferably not less than 10 µm and more preferably not less than 30 µm.

The average fiber length and average fiber diameter of the steel-based fibers can be confirmed with a microscope or so on. For example, each of these values may be an average of values of 30 steel-based fibers observed with a microscope.

When the friction material composition is a NAO material in which the content of steel-based fibers is less than 10% by mass (preferably 0% by mass) relative to a total amount of 100% by mass of the friction material composition, the coefficient of friction in a high-load region can be increased and, in addition, the stability of the coefficient of friction can be further increased.

When the friction material composition is a low-steel material in which the content of steel-based fibers is not less than 10% by mass and not more than 30% by mass (preferably 13% by mass to 23% by mass) relative to a total amount of 100% by mass of the friction material composition, the coefficient of friction in a high-load region can be increased.

In compounding steel-based fibers into the friction material composition according to the present invention, the mass ratio of the above magnesium potassium titanate to the steel-based fibers (magnesium potassium titanate/steel-based fibers) is preferably 0.1 to 3.0, more preferably 0.6 to 2.5, even more preferably 0.7 to 1.5, and particularly preferably 0.8 to 1.2. By defining the mass ratio of the above magnesium potassium titanate to the steel-based fibers within the above range, the fallout of the steel-based fibers can be further reduced.

### (2-4. Other Materials)

The friction material composition according to the present invention may contain, if necessary, in addition to the binder and the friction modifier according to the present invention, other materials (a fibrous base material, an organic friction modifier, an inorganic friction modifier, a lubricant, a pH adjuster, a filler and/or so on) commonly used in a friction material composition.

The content of the other materials in the friction material composition is preferably 20% by mass to 94% by mass relative to a total amount of 100% by mass of the friction material composition.

### (2-4-1. Fibrous Base Material)

The fibrous base material exhibits reinforceability in a friction material. Examples of the fibrous base material include inorganic fibers, metallic fibers, organic fibers, and carbon-based fibers. These types of fibrous base materials may be used singly or in combination of two or more of them.

In the case where the friction material composition contains a fibrous base material other than steel-based fibers, the content thereof is, relative to a total amount of 100% by mass of the friction material composition, preferably 0.1% by mass to 40% by mass, more preferably 0.1% by mass to 20% by mass, and even more preferably 0.1% by mass to 10% by mass.

Examples of the inorganic fibers include glass fibers, rock wool, ceramic fibers, biodegradable ceramic fibers, biodegradable mineral fibers, biosoluble fibers (such as SiO₂-CaO-SrO-based fibers), wollastonite fibers, silicate fibers, and mineral fibers and, among them, rock wool is preferred.

In the case where rock wool is contained in the friction material composition, the content thereof is, relative to a total amount of 100% by mass of the friction material composition, preferably 1% by mass to 10% by mass and more preferably 1% by mass to 7% by mass. When the content of rock wool is within the above range, the coefficient of friction can be further increased at high-load braking.

Examples of the metallic fibers include straight or curled metallic fibers consisting primarily of metal, such as fibers made of a metal alone or in an alloy form of aluminum, iron, zinc, tin, titanium, nickel, magnesium, silicon or other metals (except for steel-based fibers).

Examples of the organic fibers include aromatic polyamide (aramid) fibers, fibrillated aramid fibers (also called aramid pulp), acrylic fibers (homopolymeric or copolymeric fibers made mainly from acrylonitrile), fibrillated acrylic fibers, cellulose fibers, fibrillated cellulose fibers, and phenolic resin fibers.

The preferred organic fibers are aramid fibers or fibrillated aramid fibers because a friction material is given a moderate water absorbability to make moisture in the air easily absorbed inside the friction material and make the alkaline component in the titanate easily dissolved out of the friction material to provide a promising effect of preventing rust formation on a rotor and steel-based fibers. From the viewpoint of further increasing the thermal resistance, the organic fibers are preferably para-aramid fibers as represented by poly-p-phenylene terephthalamide. Furthermore, from the viewpoint of further increasing the formability of the friction material and further increasing the retainability of a filler, the preferred organic fibers are fibrillated aramid fibers. The specific surface area of the fibrillated aramid fibers is preferably 5 m²/g to 25 m²/g and more preferably 5 m²/g to 15 m²/g. The fiber length of the fibrillated aramid fibers is preferably 0.5 mm to 1.2 mm.

In the case where fibrillated aramid fibers are contained in the friction material composition, the content thereof is, relative to a total amount of 100% by mass of the friction material composition, preferably 1% by mass to 10% by mass, more preferably 1% by mass to 8% by mass, and even more preferably 1% by mass to 6% by mass. When the content of fibrillated aramid fibers is the above lower limit or more, the crack resistance and the wear resistance become better. When the content of fibrillated aramid fibers is the above upper limit or less, deterioration in crack resistance and wear resistance due to uneven distribution of the fibrillated aramid fibers relative to the other materials can be more certainly prevented.

Examples of the carbon-based fibers include flame-resistant fibers, PAN-based carbon fibers, pitch-based carbon fibers, and activated carbon fibers.

### (2-4-2. Organic Friction Modifier)

The organic friction modifier is a friction modifier incorporated into the composition for the purpose of further improving a friction material in terms of effectiveness against noise and vibration and wear resistance. Examples of the organic friction modifier include: unvulcanized or vulcanized rubber powders, such as tire rubber, acrylic rubber, isoprene rubber, NBR (nitrile-butadiene rubber), SBR (styrene-butadiene rubber), chlorinated butyl rubber, butyl rubber, and silicone rubber; cashew dust; rubber-coated cashew dust; and melamine dust. These organic friction modifiers may be used singly or in combination of two or more of them.

In the case where an organic friction modifier is contained in the friction material composition, the content thereof is, relative to a total amount of 100% by mass of the friction material composition, preferably 0.1% by mass to 30% by mass, more preferably 0.1% by mass to 20% by mass, and even more preferably 0.1% by mass to 10% by mass.

### (2-4-3. Inorganic Friction Modifier)

The inorganic friction modifier (except for the magnesium potassium titanate according to the present invention) is a friction modifier incorporated into the composition for the purpose of avoiding deterioration in thermal resistance of a friction material or further improving the wear resistance or further increasing the coefficient of friction. Examples of the inorganic friction modifier include an abrasive material, metallic powder, and other inorganic fillers.

As the abrasive material, a material that acts as an abrasive material depending on the material of a rotor as a counter-member to increase the coefficient of friction can be appropriately selected. The abrasive material may be selected on the basis of the Mohs hardness of the counter-member. From the viewpoint of making the abrasive material more effectively develop the coefficient of friction, the Mohs hardness of the abrasive material is preferably 6 to 9 and more preferably 6 to 8.

Examples of the abrasive material include silicon carbide, titanium dioxide, α-alumina, γ-alumina, silica (silicon dioxide), magnesia (magnesium oxide), zirconia (zirconium oxide), zircon (zirconium silicate), chromium oxide, iron oxide (such as triiron tetroxide), chromite, quartz, and iron sulfide. Among them, zirconia (zirconium oxide) or zircon (zirconium silicate) are preferred as the abrasive material. The average particle diameter of zirconia (zirconium oxide) is preferably 1 µm to 14 µm. The average particle diameter of zircon (zirconium silicate) is preferably 0.2 µm to 2 µm.

Furthermore, the abrasive material may be used by combining an abrasive material having a large average particle diameter and an abrasive material having a small average particle diameter. Specifically, an abrasive material having an average particle diameter of 0.5 µm to 15 µm and an abrasive material having an average particle diameter of 20 µm to 200 µm may be used in combination. The mass ratio of the abrasive material having a small average particle diameter to the abrasive material having a large average particle diameter (abrasive material having a small average particle diameter/abrasive material having a large average particle diameter) is preferably 0.1 to 10 and more preferably 2 to 8 from the viewpoint of further reducing the wear dust. In addition, in this case, the coefficient of friction during high-load braking can be increased and, concurrently, the stability of the coefficient of friction during light-load braking can be increased.

In the case where an abrasive material is contained in the friction material composition, the content thereof is, relative to a total amount of 100% by mass of the friction material composition, preferably 0.1% by mass to 30% by mass, more preferably 5% by mass to 25% by mass, and even more preferably 5% by mass to 18% by mass.

Examples of the metallic powder include metallic powders made of a metal alone or in an alloy form of aluminum, zinc, iron, tin or other metals. These types of metallic powders may be used singly or in combination of two or more of them.

Examples of the other inorganic fillers include vermiculite, clay, mica, talc, dolomite, chromite, mullite, calcium silicate, and titanates other than the magnesium potassium titanate according to the present invention (hereinafter, referred to as "the other titanates"). These inorganic fillers may be used singly or in combination of two or more of them.

Examples of the other titanates that can be used include: potassium hexatitanate, such as TERRACESS JSL, TERRACESS JSL-R, TERRACESS DP-R, TERRACESS DP-A, and TERRACESS DP-AS each manufactured by Otsuka Chemical Co., Ltd., TXAX-MA and TXAX-A each manufactured by Kubota Corporation, and TOFIX-S and TOFIX-SNR each manufactured by Toho Titanium Co., Ltd.; sodium hexatitanate, such as TERRACESS DSR manufactured by Otsuka Chemical Co., Ltd.; potassium octatitanate, such as TERRACESS TF-SS, TERRACESS TF-S, TERRACESS TF-L, and TERRACESS JP each manufactured by Otsuka Chemical Co., Ltd.; magnesium potassium titanate, such as TERRACESS PM and TERRACESS PS each manufactured by Otsuka Chemical Co., Ltd.; and lithium potassium titanate, such as TERRACESS L, TERRACESS L-SS, and TERRACESS JSM-M each manufactured by Otsuka Chemical Co., Ltd. The preferred other titanate is: sodium hexatitanate or potassium octatitanate each having a tunnel crystal structure; or magnesium potassium titanate or lithium potassium titanate each having a layered crystal structure, and the more preferred other titanate is magnesium potassium titanate having a layered crystal structure. A titanate having a tunnel crystal structure or a titanate having a layered crystal structure may be used singly as the other titanate or a titanate having a tunnel crystal structure and a titanate having a layered crystal structure may be used in combination as the other titanate.

In the case where the other titanate is contained in the friction material composition, the mass ratio of the other titanate to the magnesium potassium titanate according to the present invention (the other titanate/magnesium potassium titanate according to the present invention) is preferably 0.1 to 3 and more preferably 0.1 to 0.8 from the viewpoint of further increasing the coefficient of friction of a friction material in a high-load region when the friction material composition is used in the friction material.

### (2-4-4. Lubricant)

The lubricant is preferably a solid lubricant and examples of the solid lubricant include a carbon-based solid lubricant, a sulfide-based solid lubricant, and polytetrafluoroethylene (PTFE). These types of lubricants may be used singly or in combination of two or more of them. The preferred lubricant is at least one selected from the group consisting of carbon-based solid lubricants and sulfide-based solid lubricants and carbon-based solid lubricants are more preferred from the viewpoint of further reducing harmfulness to humans.

In the case where a lubricant is contained in the friction material composition, the content thereof is, relative to a total amount of 100% by mass of the friction material composition, preferably 0.1% by mass to 20% by mass, more preferably 1% by mass to 10% by mass, and even more preferably 1% by mass to 5% by mass.

Examples of the carbon-based solid lubricants include synthetic or natural graphite, flake graphite, phosphate-coated graphite, carbon black, oil coke, coal coke, activated carbon, and elastic graphitized carbon. Synthetic graphite or natural graphite is preferred from the viewpoint of more certainly giving thermal conductivity. In the case where a carbon-based solid lubricant is contained in the friction material composition, the content thereof is, relative to a total amount of 100% by mass of the friction material composition, preferably not less than 0.1% by mass, more preferably not less than 1% by mass, even more preferably not less than 2% by mass, preferably less than 15% by mass, more preferably less than 10% by mass, and even more preferably not more than 8% by mass. When the content of carbon-based solid lubricant is the above lower limit or more, the wear resistance of the friction material at high temperatures tends to become even better. Furthermore, when the content of carbon-based solid lubricant is less than the above upper limit or not more than the above upper limit, the decrease in coefficient of friction tends to be easily reduced.

The average particle diameter of the carbon-based solid lubricant is not particularly limited, but is preferably 10 µm to 1000 µm. The carbon-based solid lubricants may be used singly or in combination of two or more of them. When the average particle diameter of the carbon-based solid lubricant is the above lower limit or more, an excessive increase in thermal conductivity of the friction material composition when used as a friction material tends to be suppressed and the occurrence of vapor lock due to conduction of frictional heat to a backing plate tends to be easily reduced. Furthermore, when the average particle diameter of the carbon-based solid lubricant is the above upper limit or less, the thermal conductivity tends to improve, the hardening of the binder during formation of a friction material tends to be promoted, and, thus, the strength of the friction material tends to increase.

Examples of the above sulfide-based solid lubricant include antimony trisulfide, molybdenum disulfide, tin sulfide, iron sulfide, zinc sulfide, bismuth sulfide, tungsten disulfide. From the viewpoint of further reducing the harmfulness to humans, the preferred sulfide-based solid lubricant is tin sulfide or molybdenum disulfide. In the case where a sulfide-based solid lubricant is contained in the friction material composition, the content thereof is, relative to a total amount of 100% by mass of the friction material composition, preferably not less than 0.1% by mass, more preferably not less than 1% by mass, even more preferably not less than 2% by mass, preferably less than 15% by mass, more preferably less than 10% by mass, and even more preferably not more than 8% by mass. When the content of sulfide-based solid lubricant is the above lower limit or more, the wear of the rotor tends to be able to be further reduced. Furthermore, when the content of sulfide-based solid lubricant is less than the above upper limit or not more than the above upper limit, the decrease in coefficient of friction tends to be easily reduced.

The friction material composition according to the present invention is preferably substantially free of sulfide-based solid lubricant, such as metal sulfide, in the composition. The term "substantially free of sulfide-based solid lubricant" means that no amount of sulfide-based solid lubricant is deliberately incorporated into the friction material composition and that the friction material composition contains no sulfide-based solid lubricant except that the sulfide-based solid lubricant is mixed as a tiny amount of impurities into the friction material composition. Particularly, the content of sulfide-based solid lubricant in the friction material composition is preferably less than 0.1% by mass relative to a total amount of 100% by mass of the friction material composition and the friction material composition is more preferably fully free of sulfide-based solid lubricant. When the friction material composition is substantially free of sulfide-based solid lubricant, the harmfulness to humans is low and the effect of suppressing rust formation on a rotor can be expected.

The friction material composition according to the present invention preferably contains the magnesium potassium titanate according to the present invention, steel-based fibers, a carbon-based solid lubricant, and a binder in the composition, wherein the content of copper component is less than 0.5% by mass in terms of copper element relative to a total amount of 100% by mass of the friction material composition and the friction material composition is substantially free of sulfide-based solid lubricant.

In the friction material composition containing the magnesium potassium titanate according to the present invention, steel-based fibers, a carbon-based solid lubricant, and a binder, the content of sulfide-based solid lubricant in the friction material composition is preferably less than 0.1% by mass relative to a total amount of 100% by mass of the friction material composition. The friction material composition is more preferably fully free of sulfide-based solid lubricant. The content of the steel-based fibers is, relative to a total amount of 100% by mass of the friction material composition, preferably 10% by mass to 30% by mass and more preferably 13% by mass to 23% by mass. Furthermore, the mass ratio of the magnesium potassium titanate according to the present invention to the carbon-based solid lubricant (magnesium potassium titanate according to the present invention/carbon-based solid lubricant) is preferably 2.0 to 6.0, more preferably 3.5 to 5.5, and even more preferably 3.5 to 5.0. When the respective contents of the above components are defined within the above respective ranges, this enables the formation of a friction material that has a composition less harmful to the environment and humans and contains steel-based fibers having a larger coefficient of friction in a high-load region and producing a less amount of fine wear dust, including PM 10 and PM 2.5, during braking.

### (2-4-5. pH Adjuster)

Examples of the pH adjuster include: inorganic bases, such as calcium hydroxide (hydrated lime), sodium hydroxide, potassium hydroxide, sodium carbonate, potassium carbonate, sodium hydrogen carbonate, potassium hydrogen carbonate, trisodium phosphate, disodium hydrogen phosphate, tripotassium phosphate, and dipotassium hydrogen phosphate; organic bases, such as imidazole, histidine, and hexamethylenediamine. The preferred pH adjuster is an inorganic base from the viewpoint of cost and moisture absorbency. These pH adjusters may be used singly or in combination of two or more of them. The pH adjuster may be used to prevent the friction material and its counter-member (a rotor) from sticking together by rust.

In the case where a pH adjuster is contained in the friction material composition, the content thereof is preferably 0.1% by mass to 8% by mass relative to a total amount of 100% by mass of the friction material composition.

### (2-4-6. Filler)

Examples of the filler include barium sulfate and calcium carbonate. Preferably, barium sulfate can be used as the filler. These fillers may be used singly or in combination of two or more of them.

Barium sulfate includes: ground barium sulfate (barite powder) obtained by grinding a mineral called barite, deironing the ground product, and elutriating it; and precipitated barium sulfate obtained by artificial synthesis. Precipitated barium sulfate can be controlled in particle size depending on conditions during synthesis. Thus, desired fine-grained barium sulfate containing only a small amount of coarse particles can be produced. From the viewpoint of further reducing impurities and further homogenizing the particle size distribution of barium sulfate particles, precipitated barium sulfate is preferably used.

### (2-5. Method for Producing Friction Material Composition)

The friction material composition according to the present invention can be produced by, for example, (1) the method of mixing components with a mixer, such as a Lodige mixer ("Lodige" is a registered mark), a pressure kneader or an Eirich mixer ("Eirich" is a registered mark), or (2) the method of preparing a granulated material of desired components and, if necessary, mixing it together with other components using a mixer, such as a Lodige mixer, a pressure kneader or an Eirich mixer.

The content of each component in the friction material composition according to the present invention can be appropriately selected depending on the desired frictional properties and the friction material composition can be produced by the above-described production methods.

Alternatively, the friction material composition according to the present invention may be prepared by producing a master batch containing a particular component at a high concentration, adding a thermosetting resin and so on to the master batch, and mixing them.

### <3. Friction Material and Friction Member>

In the present invention, a friction material having a predetermined shape can be produced by preliminarily forming the above friction material composition at ordinary temperature (20°C), forming the resultant preform by the application of heat and pressure (at a forming pressure of 10 MPa to 40 MPa and a forming temperature of 150°C to 200°C), subjecting, if necessary, the resultant formed body to heat treatment (holding it at 150°C to 220°C for 1 hour to 12 hours) in a furnace, and then subjecting the formed body to machining and polishing processing.

The friction material according to the present invention is used as a friction member formed to allow its friction surface to be provided by the friction material. Examples of a friction member formable using the friction material include: (1) a structure composed of the friction material alone; and (2) a structure including a substrate, such as a back metal, and the friction material according to the present invention provided on the substrate and providing a friction surface.

The substrate is used in order to further increase the mechanical strength of the friction member. Examples of the material for the substrate include metal, such as iron and stainless steel, and fiber-reinforced resin, such as glass fiber-reinforced resin and carbon fiber-reinforced resin.

A friction material generally has a large number of microscopic pores formed inside thereof and these pores serve as escape routes for decomposition products (gaseous and liquid substances) at high temperatures to prevent reduction in frictional properties and concurrently reduce the stiffness of the friction material and increase the damping performance thereof, thus preventing the occurrence of squeal. In a normal friction material, the mixing and shape forming conditions of the materials are controlled to give a porosity of preferably 5% to 30% and more preferably 10% to 25%.

Since the friction member according to the present invention is formed of the above-described friction material composition according to the present invention, the friction member can obtain excellent frictional properties although being free of copper component or having a small content of copper component. Therefore, the friction member according to the present invention can be suitably used in all braking systems for various types of vehicles, industrial machines, and so on, such as a disc pad or a brake lining each constituting part of a braking device or a clutch facing, and can be suitably used particularly as a friction member for a regenerative braking system.

### [Examples]

Hereinafter, a description will be given in further detail of the present invention with reference to specific examples.

The present invention is not at all limited by the following examples and modifications and variations may be appropriately made therein without changing the gist of the invention.

### <Production of Titanate>

### (Comparative Example 1 (CEx. 1): Titanate A)

An amount of 496.9 g of anatase titanium dioxide (rate of chlorine ion dissolution: 20 ppm), 213.7 g of potassium carbonate, and 89.4 g of magnesium hydroxide were mixed by an ordinary method, thus obtaining a raw material mixture. The raw material mixture was packed into a vibration mil and subjected to attrition processing for 30 minutes under conditions of a frequency of 1200 cpm and an amplitude of 6.0 mm, thus obtaining an attrited mixture. A volume of 48 ml of water was added to the attrited mixture, followed by mixing, and 15 g of the attrited mixture was then formed into a pellet with an oil hydraulic press at a pressure of 10 MPa. The pellet was fired at 1000°C for four hours in an electric furnace and then slowly cooled, and the obtained fired product was ground and passed through a 20-mesh sieve, thus obtaining desired Titanate A.

The chemical composition, crystal structure, crystallite size, average particle diameter, specific surface area, particle shape, rate of alkali metal ion dissolution, and rate of chlorine ion dissolution of the obtained Titanate A are shown in Table 1.

### (Comparative Example 2 (CEx. 2): Titanate B)

A 20% by mass aqueous slurry of Titanate A produced in Comparative Example 1 was prepared, 0.27 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 300°C for an hour in an electric furnace, and slowly cooled, and the obtained fired product was passed through a 20-mesh sieve, thus obtaining desired Titanate B.

The chemical composition, crystal structure, crystallite size, average particle diameter, specific surface area, particle shape, rate of alkali metal ion dissolution, and rate of chlorine ion dissolution of the obtained Titanate B are shown in Table 1.

### (Example 1 (Ex. 1): Titanate 1)

A 20% by mass aqueous slurry of Titanate A produced in Comparative Example 1 was prepared, 0.27 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 500°C for an hour in an electric furnace, and slowly cooled, and the obtained fired product was passed through a 20-mesh sieve, thus obtaining desired Titanate 1.

The chemical composition, crystal structure, crystallite size, average particle diameter, specific surface area, particle shape, rate of alkali metal ion dissolution, and rate of chlorine ion dissolution of the obtained Titanate 1 are shown in Table 1.

### (Example 2 (Ex. 2): Titanate 2)

A 20% by mass aqueous slurry of Titanate A produced in Comparative Example 1 was prepared, 0.27 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 500°C for 12 hours in an electric furnace, and slowly cooled, and the obtained fired product was passed through a 20-mesh sieve, thus obtaining desired Titanate 2.

The chemical composition, crystal structure, crystallite size, average particle diameter, specific surface area, particle shape, rate of alkali metal ion dissolution, and rate of chlorine ion dissolution of the obtained Titanate 2 are shown in Table 1.

### (Example 3 (Ex. 3): Titanate 3)

A 20% by mass aqueous slurry of Titanate A produced in Comparative Example 1 was prepared, 0.34 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 500°C for an hour in an electric furnace, and slowly cooled, and the obtained fired product was passed through a 20-mesh sieve, thus obtaining desired Titanate 3.

The chemical composition, crystal structure, crystallite size, average particle diameter, specific surface area, particle shape, rate of alkali metal ion dissolution, and rate of chlorine ion dissolution of the obtained Titanate 3 are shown in Table 1.

### (Example 4 (Ex. 4): Titanate 4)

A 20% by mass aqueous slurry of Titanate A produced in Comparative Example 1 was prepared, 0.27 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 600°C for an hour in an electric furnace, and slowly cooled, and the obtained fired product was passed through a 20-mesh sieve, thus obtaining desired Titanate 4.

The chemical composition, crystal structure, crystallite size, average particle diameter, specific surface area, particle shape, rate of alkali metal ion dissolution, and rate of chlorine ion dissolution of the obtained Titanate 4 are shown in Table 1.

### (Example 5 (Ex. 5): Titanate 5)

A 20% by mass aqueous slurry of Titanate A produced in Comparative Example 1 was prepared, 0.22 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 500°C for an hour in an electric furnace, and slowly cooled, and the obtained fired product was passed through a 20-mesh sieve, thus obtaining desired Titanate 5.

The chemical composition, crystal structure, crystallite size, average particle diameter, specific surface area, particle shape, rate of alkali metal ion dissolution, and rate of chlorine ion dissolution of the obtained Titanate 5 are shown in Table 1.

### (Example 6 (Ex. 6): Titanate 6)

A 20% by mass aqueous slurry of Titanate A produced in Comparative Example 1 was prepared, 0.14 equivalents of sulfuric acid relative to potassium in the magnesium potassium titanate was mixed into the aqueous slurry, and the mixture was stirred at ordinary temperature (20°C) for two hours. The aqueous slurry was filtered by suction, a cake (a solid content) obtained by washing the filtrate with deionized water and separating from the filtrate was dried at 110°C for 12 hours, fired at 500°C for an hour in an electric furnace, and slowly cooled, and the obtained fired product was passed through a 20-mesh sieve, thus obtaining desired Titanate 6.

The chemical composition, crystal structure, crystallite size, average particle diameter, specific surface area, particle shape, rate of alkali metal ion dissolution, and rate of chlorine ion dissolution of the obtained Titanate 6 are shown in Table 1.

### <Measurement of Physical Properties of Titanates>

The physical properties of Titanates 1 to 6, Titanate A, and Titanate B were measured in the following manners. The results are shown in Table 1.

### (Chemical Composition)

The chemical composition was confirmed with an ICP-AES analyzer (stock number "SPS5100" manufactured by SII Nano Technology Inc.).

### (Crystal Structure)

The crystal structure was confirmed with a scanning transmission electron microscope (STEM, stock number "JEM-ARM200F" manufactured by JEOL) and a Raman spectrometer (stock number "ReactRaman 785) manufactured by METTLER TOLEDO). The observation with a scanning transmission electron microscope (STEM) was made by producing a TEM sample by argon ion milling using an ion slicer. The measurement with a Raman spectrometer was made under conditions of an excitation wavelength of 785 nm, a wavenumber of 100 cm⁻¹ to 3200 cm⁻¹, an exposure time of one second, and a number of scans of ten. Specifically, the crystal structure was confirmed in the following manner.

Fig. 1 is a view showing a scanning transmission electron microscopic (STEM) image of Titanate 1 obtained in Example 1 (Ex. 1). Fig. 5 is a view showing a scanning transmission electron microscopic (STEM) image of Titanate A obtained in Comparative Example 1 (CEx. 1).

As shown in Fig. 1, Titanate 1 obtained in Example 1 (Ex. 1) had a structure near a tunnel crystal structure. Likewise, Titanate 2 to Titanate 6 obtained in Examples 2 to 6 (Ex. 2 to Ex. 6) also had a structure near a tunnel crystal structure. On the other hand, as shown in Fig. 5, Titanate A obtained in Comparative Example 1 (CEx. 1) had a layered crystal structure. Likewise, Titanate B obtained in Comparative Example 2 (CEx. 2) also had a layered crystal structure.

Fig. 2 is a graph showing respective Raman spectra of titanates obtained in Example 1 (Ex. 1) and Comparative Example 1 (CEx. 1) and potassium hexatitanate.

As shown in Fig. 2, regarding Titanate 1 obtained in Example 1 (Ex. 1), no peak was observed near 835 cm⁻¹ which can be assumed to be a peak derived from a layered crystal structure like Titanate A in Comparative Example 1 (CEx. 1). However, regarding Titanate 1 obtained in Example 1 (Ex. 1), peaks were observed near 140 cm⁻¹ and near 860 cm⁻¹ both of which can be assumed to be peaks derived from a tunnel crystal structure like potassium hexatitanate. Therefore, the spectrum of Titanate 1 obtained in Example 1 (Ex. 1) can be said to be close to the spectrum of potassium hexatitanate.

As just described, from the scanning transmission electron microscopic (STEM) image and the Raman spectrum, Titanate 1 obtained in Example 1 (Ex. 1) was confirmed to have a pseud-tunnel crystal structure being a crystal structure close to a tunnel crystal structure. In the same manner, Titanate 2 to Titanate 6 obtained in Examples 2 to 6 (Ex. 2 to Ex. 6) were also confirmed to have a pseud-tunnel crystal structure.

Furthermore, from the Raman spectra of Titanate 1 to Titanate 6, Titanate A, and Titanate B, their respective ratio (Ia/Ib) of the peak area (Ia) in a range of 100 cm⁻¹ to 165 cm⁻¹ to the peak area (Ib) in a range of 215 cm⁻¹ to 325 cm⁻¹ and the ratio (Ic/Ib) of the peak area (Ic) in a range of 785 cm⁻¹ to 900 cm⁻¹ to the peak area (Ib) in the range of 215 cm⁻¹ to 325 cm⁻¹ were determined.

The calculation of the peak area in each of the wavelength ranges was done by eliminating the background of the Raman spectrum in the range using the asymmetric least squares method (ASLS method) and then integrating the obtained result numerically with Simpson's rule.

### (Crystallite Size)

In determining the crystallite size, X-ray diffraction measurement was made by wide-angle X-ray diffractometry. CuKα rays (with a wavelength of 1.5418 angstroms) were used as an X-ray source. As an X-ray diffraction measurement device, stock number "Ultima IV" manufactured by Rigaku Corporation was used. The X-ray diffraction measurement was made in a 2θ range of 5° to 60° and the crystallite size was calculated by the Halder-Wagner method.

### (Average Particle Diameter)

The particle diameter was measured with a laser diffraction particle size distribution measurement device (stock number "SALD-2300" manufactured by Shimadzu Corporation) and the particle diameter at a volume-based cumulative value of 50% in the obtained particle size distribution was selected as the average particle diameter.

### (Specific Surface Area)

The specific surface area was measured with an automatic specific surface area measurement device (stock number "TriStar II 3020" manufactured by Micromeritics Instrument Corporation).

### (Particle Shape)

The particle shape was confirmed with a field-emission scanning electron microscope (stock number "S-4800" manufactured by Hitachi High-Tech Corporation).

### (Rate of Alkali Metal Ion Dissolution)

The mass (X) g of the sample was measured, the sample was then added into ultrapure water to prepare a 1% by mass slurry, the slurry was stirred at 80°C for four hours, and a solid content was then removed from the slurry with a membrane filter having a pore size of 0.2 µm, thus obtaining an extraction liquid. The mass (Y) g of alkali metal ions in the obtained extraction liquid was measured with an ion chromatograph (stock number "ICS-1100" manufactured by Dionex). Subsequently, using the values of the above masses (X) g and (Y) g, the rate of alkali metal ion dissolution (% by mass) was calculated based on the formula [(Y)/(X)] × 100.

### (Rate of Chlorine Ion Dissolution)

The mass (X) g of the sample was measured, the sample was then added into ultrapure water to prepare a 1% by mass slurry, the slurry was stirred at 25°C for ten minutes, and a solid content was then removed from the slurry with a membrane filter having a pore size of 0.2 µm, thus obtaining an extraction liquid. The mass (Y) g of chlorine ions in the obtained extraction liquid was measured with an ion chromatograph (stock number "ICS-1100" manufactured by Dionex). Subsequently, using the values of the above masses (X) g and (Y) g, the rate of chlorine ion dissolution (ppm) was calculated based on the formula [(Y)/(X)] × 10⁶.

**[Table 1]**

| | | Main Components | | Other Components | Peak Area Ratio of Raman Spectrum | | Crystallite Size [A] | Average Particle Diameter [µm] | Specific Surface Area [m²/g] | Particle Shape | Rate of Alkali Metal Ion Dissolution [% by mass] | Rate of Chlorine Ion Dissolution [ppm] |
|---|---|---|---|---|---|---|---|---|---|---|---|---|
| | | Composition Formula | Crystal Structure | | Ia/Ib | Ic/Ib | | | | | | |
| Ex. 1 | Titanate 1 | K_{0.3}Mg_{0.4}Ti_{1.6}O_{3.75} | pseud-tunnel | Not detected | 0.22 | 0.24 | 68 | 6.1 | 3.62 | platy | 0.65 | 6 |
| Ex. 2 | Titanate 2 | K_{0.3}Mg_{0.4}Ti_{1.6}O_{3.75} | pseud-tunnel | Anatase titanium dioxide 3.6% by mass | 0.47 | 0.30 | 34 | 6.2 | 4.20 | platy | 1.97 | 6 |
| Ex. 3 | Titanate 3 | K_{0.2}Mg_{0.4}Ti_{1.6}O_{3.70} | pseud-tunnel | Anatase titanium dioxide 7.9% by mass | 1.84 | 0.25 | 30 | 6.0 | 4.47 | platy | 0.60 | 6 |
| Ex. 4 | Titanate 4 | K_{0.3}Mg_{0.4}Ti_{1.6}O_{3.75} | pseud-tunnel | Anatase titanium dioxide 6.2% by mass | 1.33 | 0.36 | 47 | 6.2 | 4.50 | platy | 2.22 | 8 |
| Ex. 5 | Titanate 5 | K_{0.4}Mg_{0.4}Ti_{1.6}O_{3.80} | pseud-tunnel | Not detected | 0.03 | 0.27 | 40 | 6.4 | 3.21 | platy | 1.30 | 6 |
| Ex. 6 | Titanate 6 | K_{0.5}Mg_{0.4}Ti_{1.6}O_{3.85} | pseud-tunnel | Not detected | 0.03 | 0.38 | 191 | 6.3 | 2.60 | platy | 3.04 | 6 |
| CEx. 1 | Titanate A | K_{0.8}Mg_{0.4}Ti_{1.6}O_{4.0} | layered | Not detected | 0.02 | 0.67 | 533 | 6.9 | 1.26 | platy | 3.60 | 25 |
| CEx. 2 | Titanate B | K_{0.3}Mg_{0.4}Ti_{1.6}O_{3.75} | layered | Not detected | 0.02 | 0.67 | 256 | 6.3 | 2.27 | platy | 0.20 | 6 |

As shown in Table 1, Titanate 1 to Titanate 6 obtained in Examples 1 to 6 (Ex. 1 to Ex. 6) had a pseud-tunnel crystal structure, wherein in terms of Raman spectrum the ratio (Ia/Ib) was not less than 0.03 and the ratio (Ic/Ib) was not more than 0.40. On the other hand, Titanate A and Titanate B obtained in Comparative Example 1 (CEx. 1) and Comparative Example 2 (CEx. 2) had a layered crystal structure, wherein in terms of Raman spectrum the ratio (Ia/Ib) was less than 0.03 and the ratio (Ic/Ib) was more than 0.40.

### <Production of Friction Member>

For producing friction members, Titanate 1 to Titanate 6, Titanate A, Titanate B, and the following materials were used.

### (Binder)

Thermosetting resin: Hexamethylenetetramine-containing novolac phenolic resin powder

### (Other Titanates)

Titanate C: Potassium hexatitanate, bar-like particles, average length of 65 µm, average breadth of 13 µm
Titanate D: Sodium hexatitanate, porous spherical particles, average particle diameter of 21.2 µm, manufactured by Otsuka Chemical Co., Ltd. (trade name: TERRACESS DSR)
Titanate E: Potassium hexatitanate, porous spherical particles, average particle diameter of 60.1 µm, manufactured by Otsuka Chemical Co., Ltd. (trade name: TERRACESS DP-AS)
Titanate F: Potassium hexatitanate, bar-like particles, average particle diameter of 36 µm, manufactured by Otsuka Chemical Co., Ltd. (trade name: TERRACESS JSL)

### (Steel-Based Fibers)

Steel-based fibers: trade name "Cut Wool BS-1V" by Bonstar Hanbai Kabushiki Kaisha, curled fibers, average fiber length (cut length) of 1.5 mm, average fiber diameter of 50 µm

### (Other Materials)

Rock wool: average fiber length of 125 µm, maximum content of shot (not less than 125 µm) of 5.0%
Aramid fibers: fibrillated para-aramid fibers (aramid pulp), fiber length of 0.89 mm, specific surface area of 9.8 m²/g
Cashew dust: average particle diameter of 200 µm
Zirconium silicate 1: zirconium silicate powder, average particle diameter of 1.1 µm, Mohs hardness of 7.5
Zirconium silicate 2: zirconium silicate powder, average particle diameter of 1.5 µm, Mohs hardness of 7.5
Iron oxide: average particle diameter of 0.3 µm, Mohs hardness of 6
Alumina: α-alumina, average particle diameter of 57 µm, Mohs hardness of 9
Mica: natural mica, average particle diameter of 180 µm
Graphite: synthetic graphite, average particle diameter of 730 µm
Antimony trisulfide: average particle diameter of 1.5 µm
Tin sulfide: tin sulfide (II), average particle diameter of 7 µm
Hydrated lime: average particle diameter of 0.2 µm
Barium sulfate 1: precipitated barium sulfate powder, average particle diameter of 1.6 µm
Barium sulfate 2: ground barium sulfate powder, average particle diameter of 24 µm

### (Examples 7 to 17 (Ex. 7 to Ex. 17), Comparative Example 3 (CEx. 3), and Reference Example 1 (REx. 1): Friction Member (NAO Material))

Materials were compounded at each compounding ratio described in Tables 2 and 3 and mixed for three minutes with an Eirich mixer. A pressure of 15 MPa was applied to the obtained mixture at ordinary temperature (20°C) for five seconds, thus preparing a preform. The preform was inserted into a cavity of a hot forming die heated to 150°C and the preform with a backing plate (material: steel) placed thereon was pressurized at 10 MPa to 40 MPa for 300 seconds to give a porosity of 15% in a resultant formed body. A degassing process was performed five times between after 5 seconds and after 70 seconds counted from the start of the pressurization. The obtained formed body was put into a thermostatic oven heated to 220°C and held for two hours therein to completely cure it, thus obtaining a friction member (NAO material).

### (Examples 18 to 21 (Ex. 18 to Ex. 21), Comparative Examples 4 to 7 (CEx. 4 to CEx. 7): Friction Member (Low-Steel Material))

Materials were compounded at each compounding ratio described in Tables 5 and 6 and mixed for three minutes with an Eirich mixer. The obtained mixture was loaded into a cavity of a hot forming die heated to 150°C and the mixture with a backing plate (material: steel) placed thereon was pressurized at 15 MPa to 40 MPa for 240 seconds to give a porosity of 15% in a resultant formed body. The obtained formed body was put into a thermostatic oven heated to 210°C and held for two hours therein to completely cure it, thus obtaining a friction member (low-steel material).

### <Evaluations of Friction Member>

The Rockwell hardness and fade test for each of the friction members produced in the above manners were evaluated in the following manners.

### (Rockwell Hardness)

The Rockwell hardness of the surface of each friction member was measured in conformity with the method defined in JIS D4421. S scale was used as a scale for hardness.

### (Friction Test 1)

The surface (friction surface) of the friction member was polished 1.0 mm and the friction member was then subjected to a braking efficacy test based on JASO C406. In this regard, the braking efficacy test was performed by changing the speed condition of the first fade test to a speed of 160 km/h with the assumption of a high-load condition. A cast-iron rotor belonging to Standard No. A48/A48M in the ASTM standard was used as the rotor.

Fig. 3 is a graph showing the relationship between the number of brakes and the coefficient of friction during brake fade in Friction test 1 for friction members obtained in Example 7 (Ex. 7) and Comparative Example 3 (CEx. 3).

Fig. 3 shows that Example 7 in which magnesium potassium titanate having a pseud-tunnel crystal structure was used exhibited a higher coefficient of friction in a high-load region and more excellent stability of the coefficient of friction compared to Comparative Example 3 in which magnesium potassium titanate having a layered crystal structure was used.

Fig. 4 is a graph showing the relationship between the amount of change in coefficient of friction (µ) with the rotor temperature and the average coefficient of friction (µ) during brake fade in Friction test 1 for friction members obtained in Example 7 (Ex. 7), Comparative Example 3 (CEx. 3), and Reference Example 1 (REx. 1). The average coefficient of friction (µ) during brake fade was determined from an average value (average µ) of coefficients of friction at ten brakes in the first fade test results.

Fig. 4 shows that Example 7 in which magnesium potassium titanate having a pseud-tunnel crystal structure was used exhibited an equivalent or higher coefficient of friction and increased the stability of the coefficient of friction even compared to Reference Example 1 in which potassium hexatitanate having a tunnel crystal structure was used.

In relation to Examples 7 to 17, Comparative Example 3, and Reference Example 1, based on the test results, the average value (average µ) of coefficients of friction at ten brakes in the first fade test results and Δµ (maximum - minimum) as a difference between the maximum µ and the minimum µ during the first fade were determined. The results are shown in Tables 2 and 3 below.

**[Table 2]**

| | | | Ex. 7 | Ex. 8 | Ex. 9 | Ex. 10 | Ex. 11 | Ex. 12 | CEx. 3 | REx. 1 |
|---|---|---|---|---|---|---|---|---|---|---|
| Composition of Friction Material [% by mass] | Binder | Thermosetting resin | 9.4 | 9.4 | 9.4 | 9.4 | 9.4 | 9.4 | 9.4 | 9.4 |
| | Titanate | Titanate1 | 18.5 | 9.3 | - | - | - | - | - | - |
| | | Titanate2 | - | - | 18.5 | - | - | - | - | - |
| | | Titanate3 | - | - | - | 18.5 | - | - | - | - |
| | | Titanate5 | - | - | - | - | 18.5 | - | - | - |
| | | Titanate6 | - | - | - | - | - | 18.5 | - | - |
| | | Titanate A | - | - | - | - | - | - | 18.5 | - |
| | | Titanate C | - | - | - | - | - | - | - | 18.5 |
| | Steel-Based Fibers | Steel fibers | - | - | - | - | - | - | - | - |
| | Other Materials | Rock wool | 5.1 | 5.1 | 5.1 | 5.1 | 5.1 | 5.1 | 5.1 | 5.1 |
| | | Aramid fibers | 2.5 | 2.5 | 2.5 | 2.5 | 2.5 | 2.5 | 2.5 | 2.5 |
| | | Cashew dust | 5.4 | 5.4 | 5.4 | 5.4 | 5.4 | 5.4 | 5.4 | 5.4 |
| | | Zirconium silicate1 | 8.5 | 8.5 | 8.5 | 8.5 | 8.5 | 8.5 | 8.5 | 8.5 |
| | | Iron oxide | 9.3 | 9.3 | 9.3 | 9.3 | 9.3 | 9.3 | 9.3 | 9.3 |
| | | Mica | 5.1 | 5.1 | 5.1 | 5.1 | 5.1 | 5.1 | 5.1 | 5.1 |
| | | Graphite | 1.5 | 1.5 | 1.5 | 1.5 | 1.5 | 1.5 | 1.5 | 1.5 |
| | | Antimony trisulfide | 1.8 | 1.8 | 1.8 | 1.8 | 1.8 | 1.8 | 1.8 | 1.8 |
| | | Hydrated lime | 1.6 | 1.6 | 1.6 | 1.6 | 1.6 | 1.6 | 1.6 | 1.6 |
| | | Barium sulfate1 | 31.3 | 40.5 | 31.3 | 31.3 | 31.3 | 31.3 | 31.3 | 31.3 |
| Copper Content in Terms of Copper Element (% by mass) | | | 0 | 0 | 0 | 0 | 0 | 0 | 0 | 0 |
| Mass Ratio of Titanate to Binder (Titanate/Binder) | | | 2.0 | 1.0 | 2.0 | 2.0 | 2.0 | 2.0 | 2.0 | 2.0 |
| Mass Ratio of Titanate to Steel-Based Fibers (Titanate/Steel-Based Fibers) | | | - | - | - | - | - | - | - | - |
| Evaluations of Friction Member | Rockwell Hardness | | 55 | 50 | 54 | 57 | 58 | 59 | 48 | 81 |
| | Friction Test1 | Average µ | 0.405 | 0.402 | 0.400 | 0.385 | 0.389 | 0.373 | 0.365 | 0.383 |
| | | Δµ (Max. - Min.) | 0.03 | 0.07 | 0.05 | 0.09 | 0.04 | 0.09 | 0.06 | 0.10 |

**[Table 3]**

| | | | Ex. 13 | Ex. 14 | Ex. 15 | Ex. 16 | Ex. 17 |
|---|---|---|---|---|---|---|---|
| Composition of Friction Material [% by mass] | Binder | Thermosetting resin | 9.4 | 9.4 | 9.4 | 9.4 | 9.4 |
| | Titanate | Titanate 1 | 13.9 | 9.3 | 9.3 | 9.3 | 9.3 |
| | | Titanate A | 4.6 | 9.3 | - | - | - |
| | | Titanate D | - | - | 9.3 | - | - |
| | | Titanate E | - | - | - | 9.3 | - |
| | | Titanate F | - | - | - | - | 9.3 |
| | Steel-Based Fibers | Steel fibers | - | - | - | - | - |
| | Other Materials | Rock wool | 5.1 | 5.1 | 5.1 | 5.1 | 5.1 |
| | | Aramid fibers | 2.5 | 2.5 | 2.5 | 2.5 | 2.5 |
| | | Cashew dust | 5.4 | 5.4 | 5.4 | 5.4 | 5.4 |
| | | Zirconium silicate 1 | 8.5 | 8.5 | 8.5 | 8.5 | 8.5 |
| | | Iron oxide | 9.3 | 9.3 | 9.3 | 9.3 | 9.3 |
| | | Mica | 5.1 | 5.1 | 5.1 | 5.1 | 5.1 |
| | | Graphite | 1.5 | 1.5 | 1.5 | 1.5 | 1.5 |
| | | Antimony trisulfide | 1.8 | 1.8 | 1.8 | 1.8 | 1.8 |
| | | Hydrated lime | 1.6 | 1.6 | 1.6 | 1.6 | 1.6 |
| | | Barium sulfate 1 | 31.3 | 31.2 | 31.2 | 31.2 | 31.2 |
| Copper Content in Terms of Copper Element (% by mass) | | | 0 | 0 | 0 | 0 | 0 |
| Mass Ratio of Titanate to Binder (Titanate/Binder) | | | 2.0 | 2.0 | 2.0 | 2.0 | 2.0 |
| Mass Ratio of Titanate to Steel-Based Fibers (Titanate/Steel-Based Fibers) | | | - | - | - | - | - |
| Evaluations of Friction Member | Rockwell Hardness | | 61 | 64 | 59 | 63 | 65 |
| | Friction Test 1 | Average µ | 0.411 | 0.387 | 0.387 | 0.380 | 0.408 |
| | | Δµ (Max. - Min.) | 0.08 | 0.08 | 0.10 | 0.10 | 0.08 |

### (Friction Test 2)

The surface (friction surface) of the friction member (the low-steel material) was polished 1.0 mm, thus processing it into a friction member for a scale dynamometer test. Using the friction member and a rotor (a cast-iron rotor belonging to type A in the ASTM standard), they were subjected to lapping under braking conditions of 500 brakes at a speed of 65 km/h and a deceleration of 3.5 m/s². Using the friction member and the rotor previously subjected to the lapping under the above conditions, a friction test was conducted under frictional conditions shown in Table 4. The average coefficient of friction, the wear volume of friction material, and the wear volume of the rotor were measured. The test was conducted twice and the average value of the two test results was employed as a measurement result of this test. The results are shown in Table 5.

### (Wear Dust Measurement)

The surface (friction surface) of the friction member (the low-steel material) was polished 1.0 mm, thus processing it into a friction member for a scale dynamometer test. Using the friction member and a disc rotor (a cast-iron rotor belonging to type A in the ASTM standard), they were subjected to lapping under braking conditions of 500 brakes at a speed of 65 km/h and a deceleration of 3.5 m/s². A wear dust collecting device was attached to the scale dynamometer. The wear dust collecting device was fitted with an MCI Sampler (a filtering device for trapping PM 10-2.5 and PM 2.5) manufactured by Tokyo Dylec Corporation. Next, using the friction member and the disc rotor previously subjected to the lapping under the above conditions, a friction test was conducted under frictional conditions shown in Table 4. The masses of particulate matters (the amount of PM 10-2.5 produced and the amount of PM 2.5 produced) as wear dust produced during the friction test and trapped by filters were measured. The test was conducted twice and the average value of the two test results was employed as a measurement result of this test. The results are shown in Table 6.

**[Table 4]**

| Item | Initial Speed at Braking (km/h) | Braking Deceleration (m/s²) | Number of Brakes [times] | Number of Repetitions |
|---|---|---|---|---|
| Town Mode | 15 | 1.0 | 4 | |
| | 35 | 1.0 | 4 | |
| | 50 | 1.0 | 4 | 10 |
| High-Speed Mode | 35 | 1.0 | 1 | |
| | 70 | 1.0 | | |
| | 120 | 1.0 | | |

**[Table 5]**

| | | | Ex. 18 | Ex. 19 | Ex. 20 | Ex. 21 | CEx. 4 | CEx. 5 | CEx. 6 | CEx. 7 |
|---|---|---|---|---|---|---|---|---|---|---|
| Composition of Friction Material [% by mass] | Binder | Thermosetting resin | 9 | 9 | 10 | 10 | 9 | 9 | 10 | 10 |
| | Titanate | Titanate 1 | 14 | 7 | 15 | 25 | - | - | - | - |
| | | Titanate A | - | 7 | - | - | 14 | - | 15 | - |
| | Steel-Based Fibers | Steel fibers | 16 | 16 | 17 | 17 | 16 | 16 | 17 | 17 |
| | Other Materials | Aramid fibers | 1 | 1 | 1 | 1 | 1 | 1 | 1 | 1 |
| | | Zirconium silicate 2 | 7 | 7 | 7 | 7 | 7 | 7 | 7 | 7 |
| | | Alumina | 1 | 1 | 1 | 1 | 1 | 1 | 1 | 1 |
| | | Mica | 12 | 12 | 17 | 13 | 12 | 18 | 17 | 23 |
| | | Graphite | 6 | 6 | 6 | 6 | 6 | 6 | 6 | 6 |
| | | Tin sulfide | 14 | 14 | - | - | 14 | 14 | - | - |
| | | Barium sulfate 2 | 20 | 20 | 26 | 20 | 20 | 28 | 26 | 35 |
| Copper Content in Terms of Copper Element (% by mass) | | | 0 | 0 | 0 | 0 | 0 | 0 | 0 | 0 |
| Mass Ratio of Titanate to Carbon-Based Solid Lubricant (Titanate/Carbon-Based Solid Lubricant) | | | 2.3 | 2.3 | 2.5 | 4.2 | 2.3 | 0.0 | 2.5 | 0.0 |
| Mass Ratio of Titanate to Binder (Titanate/Binder) | | | 1.6 | 1.6 | 1.5 | 2.5 | 1.6 | 0.0 | 1.5 | 0.0 |
| Mass Ratio of Titanate to Steel-Based Fibers (Titanate/Steel-Based Fibers) | | | 0.9 | 0.9 | 0.9 | 1.5 | 0.9 | 0.0 | 0.9 | 0.0 |
| Evaluations of Friction Member | Rockwell Hardness | | 83 | 81 | 72 | 75 | 79 | 76 | 69 | 64 |
| | Friction Test 2 | Avg. Coeff. of Friction | 0.430 | 0.420 | 0.445 | 0.438 | 0.406 | 0.410 | 0.388 | 0.413 |
| | | Fric. Material Wear [g] | below 0.1 | below 0.1 | below 0.1 | below 0.1 | below 0.1 | 0.1 | below 0.1 | below 0.1 |
| | | Rotor Wear [g] | below 0.1 | below 0.1 | below 0.1 | below 0.1 | below 0.1 | 0.1 | below 0.1 | below 0.1 |

**[Table 6]**

| | | | Ex. 18 | Ex. 19 | Ex. 20 | Ex. 21 | CEx. 5 | CEx. 7 |
|---|---|---|---|---|---|---|---|---|
| Composition of Friction Material [% by mass] | Binder | Thermosetting resin | 9 | 9 | 10 | 10 | 9 | 10 |
| | Titanate | Titanate 1 | 14 | 7 | 15 | 25 | - | - |
| | | Titanate A | - | 7 | - | - | - | - |
| | Steel-Based Fibers | Steel fibers | 16 | 16 | 17 | 17 | 16 | 17 |
| | Other Materials | Aramid fibers | 1 | 1 | 1 | 1 | 1 | 1 |
| | | Zirconium silicate 2 | 7 | 7 | 7 | 7 | 7 | 7 |
| | | Alumina | 1 | 1 | 1 | 1 | 1 | 1 |
| | | Mica | 12 | 12 | 17 | 13 | 18 | 23 |
| | | Graphite | 6 | 6 | 6 | 6 | 6 | 6 |
| | | Tin sulfide | 14 | 14 | - | - | 14 | - |
| | | Barium sulfate | 20 | 20 | 26 | 20 | 28 | 35 |
| Mass Ratio of Titanate to Carbon-Based Solid Lubricant (Titanate/Carbon-Based Solid Lubricant) | | | 2.3 | 2.3 | 2.5 | 4.2 | 0.0 | 0.0 |
| Mass Ratio of Titanate to Binder (Titanate/Binder) | | | 1.6 | 1.6 | 1.5 | 2.5 | 0.0 | 0.0 |
| Mass Ratio of Titanate to Steel-Based Fibers (Titanate/Steel-Based Fibers) | | | 0.9 | 0.9 | 0.9 | 1.5 | 0.0 | 0.0 |
| Evaluations of Friction Member | Measurement of Wear Dust | PM10-2.5 Production [µg] | 260 | 250 | 104 | 92 | 375 | 238 |
| | | PM2.5 production [µg] | 160 | 150 | 109 | 90 | 182 | 151 |

It was confirmed from Fig. 5 that the friction members in Examples 18 to 21 (Ex. 18 to Ex. 21) in which magnesium potassium titanate of a pseud-tunnel crystal structure (Titanate 1) was used could be formed into low-steel materials having a high coefficient of friction.

On the other hand, the friction members in Comparative Examples 4 and 6 (CEx. 4 and CEx. 6) in which Titanate A having a layered crystal structure was used and the friction members in Comparative Examples 5 and 7 (CEx. 5 and CEx. 7) containing no titanate were particularly insufficient in coefficient of friction.

It was confirmed from Fig. 6 that the friction members in Examples 18 and 19 (Ex. 18 and Ex. 19) in which magnesium potassium titanate of a pseud-tunnel crystal structure (Titanate 1) was used could be formed into low-steel materials producing less fine wear dust.

Also, it was confirmed that the friction members in Examples 20 and 21 (Ex. 20 and Ex. 21) containing magnesium potassium titanate of a pseud-tunnel crystal structure (Titanate 1) and free of tin sulfide could be formed into low-steel materials in which the amount of wear dust produced was particularly small.

On the other hand, the friction member in Comparative Example 5 (CEx. 5) containing no titanate produced much wear dust and was therefore insufficient for use as a low-steel material.

## Claims

1. A magnesium potassium titanate represented by a composition formula KₓMg_{0.4}Ti_{1.6}O_{4-y} [where 0.1 ≤ x ≤ 0.6 and y = (0.8-x)/2], wherein, in terms of Raman spectrum, a ratio (Ia/Ib) of a peak area (Ia) in a range of 100 cm⁻¹ to 165 cm⁻¹ to a peak area (Ib) in a range of 215 cm⁻¹ to 325 cm⁻¹ is not less than 0.03 and a ratio (Ic/Ib) of a peak area (Ic) in a range of 785 cm⁻¹ to 900 cm⁻¹ to the peak area (Ib) in the range of 215 cm⁻¹ to 325 cm⁻¹ is not more than 0.40.

2. The magnesium potassium titanate according to claim 1, being substantially free of anatase titanium dioxide.

3. The magnesium potassium titanate according to claim 1 or 2, being in form of platy particles.

4. The magnesium potassium titanate according to claim 1 or 2, having an average particle diameter of 0.1 µm to 100 µm.

5. The magnesium potassium titanate according to claim 1 or 2, having a specific surface area of 0.1 m²/g to 10 m²/g.

6. The magnesium potassium titanate according to claim 1 or 2, having a rate of alkali metal ion dissolution of 0.01% by mass to 15% by mass.

7. A friction modifier made of the magnesium potassium titanate according to claim 1 or 2.

8. A friction material composition containing the magnesium potassium titanate according to claim 1 or 2 and a binder and having a content of copper component of less than 0.5% by mass in terms of copper element relative to a total amount of 100% by mass of the friction material composition.

9. The friction material composition according to claim 8, wherein a content of the magnesium potassium titanate is 1% by mass to 40% by mass relative to a total amount of 100% by mass of the friction material composition.

10. The friction material composition according to claim 8, further containing at least one of a titanate having a layered crystal structure and a titanate having a tunnel crystal structure.

11. The friction material composition according to claim 8, being substantially free of sulfide-based solid lubricant.

12. The friction material composition according to claim 8, wherein a content of steel-based fibers is less than 10% by mass relative to a total amount of 100% by mass of the friction material composition.

13. The friction material composition according to claim 8, wherein a content of steel-based fibers is not less than 10% by mass relative to a total amount of 100% by mass of the friction material composition.

14. A friction material being a formed body of the friction material composition according to claim 8.

15. A friction member comprising the friction material according to claim 14.
